# EUROPÄISCHE PATENTANMELDUNG

(11) **EP 2 455 632 A1**
(43) Veröffentlichungstag der Anmeldung: **23.05.2012**
(21) Anmeldenummer: 11189683.3
(22) Anmeldetag: 18.11.2011
(51) Int. Cl.: F16C 33/78, F16J 15/32

(54) **Radialwellendichtring mit einer Rückhaltevorrichtung für eine Zugfeder**

(30) Priorität: 19.11.2010 DE 102010044177
(71) Anmelder: Aktiebolaget SKF, 41 550 Göteborg (SE)
(72) Erfinder: Schweitzer, Ferdinand, 3352 St. Peter in der Au (AT)
(74) Vertreter: Schonecke, Mitja

(57) **Zusammenfassung**

Die Erfindung betrifft einen Radialwellendichtring (13a, 13b) aufweisend einen Stützring (19) und einen mit dem Stützring (19) verbundenen Dichtring (21), der eine radial nach innen weisende Dichtlippe (17a, 17b) aufweist, der eine Zugfeder (25) zugeordnet ist, die ausgebildet ist, in einer Betriebsposition des Radialwellendichtrings (13a, 13b) die Dichtlippe (17a, 17b) gegen eine mit der Dichtlippe (17a, 17b) zusammenwirkende Dichtungslaufbahn (11a, 11b) zu drücken, des Weiteren aufweisend eine zum Zurückhalten der Zugfeder (25) ausgebildete Rückhaltevorrichtung (27) und eine die Zugfeder (25) radial von außen umfangende starre Innenumfangswand (29), an der sich die Rückhaltevorrichtung (27) radial abstützt.

## Beschreibung

Die Erfindung betrifft einen Radialwellendichtring aufweisend einen Stützring und einen mit dem Stützring verbundenen Dichtring, der eine radial nach innen weisende Dichtlippe aufweist, der eine Zugfeder zugeordnet ist, die ausgebildet ist, in einer Betriebsposition des Radialwellendichtrings die Dichtlippe gegen eine mit der Dichtlippe zusammenwirkende Dichtungslaufbahn zu drücken.

Die DE 196 52 001 A1 beschreibt ein integriertes Dichtungssystem für automatische Getriebe, bestehend im wesentlichen aus einem einstückigen Teil, das gebildet wird aus einem ringförmigen Strukturelement aus Metall zur Montage in einen ringförmigen Raum zwischen einer Hauptabtriebswelle, einer Halbwelle und einem Gehäuse des automatischen Getriebes. Das integrierte Dichtungssystem weist einen Satz radialer Dichtungselemente aus Kautschuk auf, die ein erstes Element mit einer Dichtlippe aufweist, die gegen die Hauptabtriebswelle anliegt und welche eine Ringfeder zur Aufnahme von radialen Kräften aufnimmt, und die eine Schutzrippe aufweist, die ein Lösen der Feder verhindern soll.

Aufgabe der Erfindung ist es, einen Radialwellendichtring mit einer verbesserten Rückhaltevorrichtung zu schaffen.

Die Aufgabe der Erfindung wird gelöst durch einen Radialwellendichtring aufweisend einen Stützring und einen mit dem Stützring verbundenen Dichtring, der eine radial nach innen weisende Dichtlippe aufweist, der eine Zugfeder zugeordnet ist, die ausgebildet ist, in einer Betriebsposition des Radialwellendichtrings die Dichtlippe gegen eine mit der Dichtlippe zusammenwirkende Dichtungslaufbahn zu drücken, des Weiteren aufweisend eine zum Zurückhalten der Zugfeder ausgebildete Rückhaltevorrichtung und eine die Zugfeder radial von außen umfangende starre Innenumfangswand, an der sich die Rückhaltevorrichtung radial abstützt.

Die starre Umfangswand kann insbesondere eine aus metallischem Werkstoff bestehende Umfangswand sein. Die starre Umfangswand kann insoweit derart starr ausgebildet sein, dass sich die Gestalt, insbesondere der Innendurchmesser der Umfangswand unter Fliehkrafteinfluss, insbesondere aufgrund einer hohen Drehzahl der Umfangswand oder der Rückhaltevorrichtung nicht oder nur unwesentlich verändert. Eine unwesentliche Veränderung ist insbesondere dann gegeben, wenn eine Änderung des Durchmessers kleiner ist als der halbe Querschnitt der Zugfeder.

Indem die Rückhaltevorrichtung sich an einer die Zugfeder radial von außen umfangenden starren Innenumfangswand abstützt, kann einer Formänderung, insbesondere einer Durchmesseraufweitung der Rückhaltevorrichtung aufgrund von Fliehkräften, die bei einer Rotation der Rückhaltevorrichtung, insbesondere bei hohen Drehzahlen auftreten können, entgegengewirkt werden. Dadurch bleibt die Rückhaltevorrichtung auch unter Fliehkrafteinfluss formstabil bzw. behält zumindest weitgehend oder sogar vollständig seine Ursprungsgestalt bei, so dass die Rückhaltevorrichtung ihre ursprüngliche Lage bezüglich der Zugfeder beibehält und folglich ein Rückhaltevermögen der Rückhaltevorrichtung verbessert ist bzw. insbesondere bei hohen Drehzahlen erst gewährleistet ist.

Die Rückhaltevorrichtung kann ausgebildet sein, ein Herausfallen der Zugfeder aus der Anordnung des Radialwellendichtrings zu verhindern. Die Rückhaltevorrichtung kann insbesondere ausgebildet sein, ein Lösen der Zugfeder von ihrem Sitz an der Dichtlippe zu verhindern.

Der Radialwellendichtring kann also einen Stützring aufweisen und einen mit dem Stützring verbundenen Dichtring, der eine radial nach innen weisende Dichtlippe aufweist, der eine Zugfeder zugeordnet ist, die ausgebildet ist, in einer Betriebsposition des Radialwellendichtrings die rotierende Dichtlippe gegen eine mit der Dichtlippe zusammenwirkende Dichtungslaufbahn zu drücken, des Weiteren aufweisend eine Rückhaltevorrichtung für die Zugfeder, bei dem die Rückhaltevorrichtung ausgebildet ist, ein fliehkraftbedingtes Aufweiten der mit der Dichtlippe mitrotierenden Zugfeder im Durchmesser auf ein vorgegebenes Höchstmaß zu begrenzen.

Die Rückhaltevorrichtung kann sich in einer Betriebsposition des Radialwellendichtrings radial nach außen über die starre Innenumfangswand gegen einen statischen Dichtungssitz abstützen an dem der Radialwellendichtring eingesetzt ist.

Die Rückhaltevorrichtung kann mit dem Stützring verbunden sein. Die Rückhaltevorrichtung kann insbesondere in radialer Richtung zwischen der Zugfeder und dem Stützring angeordnet sein. Die Rückhaltevorrichtung kann die Zugfeder von außen koaxial umgeben.

In allen erfindungsgemäßen Ausführungen kann die starre Innenumfangswand durch eine Innenwand des Stützrings gebildet werden. Der Stützring kann dabei eine sich axial erstreckende Mantelwand aufweisen, die insbesondere eine Stützfläche für eine statische Dichtfläche des Radialwellendichtrings bildet, und eine sich radial erstreckende Ringwand aufweisen, an dessen nach innen weisendem Ende, welches einen Innendurchmesser des Stützringes bildet, der Dichtring befestigt ist.

In allen erfindungsgemäßen Ausführungen kann die Rückhaltevorrichtung ein ringförmiges, insbesondere elastomeres Einsatzteil aufweisen, das radial zwischen der Innenumfangswand und der Zugfeder eingesetzt ist. Die Rückhaltevorrichtung kann insbesondere von einem zwischen Stützring und Zugfeder eingesetztem Elastomer-Ring gebildet werden.

Das Einsatzteil und/oder der Elastomer-Ring kann einen radial zwischen Innenumfangswand und der Zugfeder liegenden Raum teilweise ausfüllen, unter Belassen lediglich eines Ringspaltes, dessen Spaltbreite geringer ist, als der Durchmesser der Zugfeder. Das Einsatzteil und/oder der Elastomer-Ring kann in die Innenumfangswand eingesetzt, eingepresst oder an die Innenumfangswand anvulkanisiert sein.

Die Rückhaltevorrichtung, insbesondere das Einsatzteil und/oder der Elastomer-Ring kann eine auf die Zugfeder zuweisende, an den Querschnitt der Zugfeder angepasste konturierte radiale Innenseite aufweisen. Im Falle einer üblichen Zugfeder mit einem Kreisquerschnitt kann die der Zugfeder angepasst konturierte radiale Innenseite im Querschnitt eine Kreisbogenform aufweisen.

Mit anderen Worten kann die Innenseite als Rille ausgebildet sein, welche die Zugfeder unter Belassen eines gleichmäßigen Spaltes über einen Teil ihrer Mantelfläche umgreift.

In allen erfindungsgemäßen Ausführungen kann die Rückhaltevorrichtung somit eine an den Querschnitt der Zugfeder angepasst konturierte umlaufenden Rille aufweisen. Dabei kann die Rille ausgebildet sein, die Zugfeder unter Belassen eines Spaltes über einen Teil ihrer Mantelfläche zu umgreifen.

In einer alternativen oder ergänzenden Ausführungsform zu einem Einsatzteil und/oder einem Elastomer-Ring kann die Rückhaltevorrichtung einen zwischen der Innenumfangswand und der Zugfeder eingesetzten Metall-Ring aufweisen. Der Metall-Ring kann insbesondere zwischen Stützring und Zugfeder angeordnet sein.

Der die Rückhaltevorrichtung bildende Metall-Ring kann gegebenenfalls auch durch eine Ausformung des Stützrings gebildet werden.

Der Metall-Ring kann eine sich an der Innenumfangswand abstützende axial erstreckende Mantelwand und eine sich radial erstreckende Ringstirnwand aufweisen. Dabei kann die Ringstirnwand bezüglich der Zugfeder axial versetzt angeordnet sein und einem freien Stirnende des Dichtrings benachbart sich radial nach innen mindestens bis zu einem Innendurchmesser der Zugfeder erstreckt.

Die Erfindung betrifft außerdem eine Lageranordnung aufweisend eine Achse oder Welle mit einer Dichtungslaufbahn, eine drehbare Nabe oder einen Außenring des Wälzlagers, mit einem Dichtungssitz, sowie einen zwischen Nabe bzw. dem Außenring und Achse bzw. Welle angeordneten Radialwellendichtring wie erfindungsgemäß beschrieben.

Bei der Lageranordnung kann die Achse oder Welle von einem Innenring eines Wälzlagers und/oder die Nabe von einem Außenring eines Wälzlagers gebildet werden. Alternativ kann bei der Lageranordnung die Achse oder Welle mit einem Innenring eines Wälzlagers und/oder die Nabe mit einem Außenring eines Wälzlagers verbunden sein.

Die Lageranordnung kann einen Radialwellendichtring umfassen, der in einem axialen Abstand zur Dichtlippe eine Schutzlippe aufweist.

Ein von Dichtlippe und Schutzlippe begrenzter Ringraum kann mit einem Wälzlagerfett befüllt sein.

Zusammenfassend stellt die Erfindung somit eine Lösung bereit, bei der Wellendichtringe auch über den für sie zulässigen Drehzahlen verwendet werden können. Über die Zulässigkeit erhöhte Drehzahlen führen im Allgemeinen dazu, dass aufgrund der Fliehkraft die Dichtlippe von ihrer Dichtungsfläche abhebt. Unter demselben Fliehkrafteinfluss wird auch die Zugfeder d.h. die Schlauchfeder aufgeweitet. Bei weiterer Drehzahlsteigerung bzw. Fliehkrafterhöhung kann es sogar passieren, dass die Zugfeder abgeschleudert wird. ein Abheben kann bei gängigen zweilippigen Wellendichtringen beispielsweise bei ca. 8.000 Umdrehungen pro Minute auftreten. Dies ist nicht nur von der Fliehkraft, sondern auch von den Öldruckverhältnissen abhängig.

Bei dem erfindungsgemäßen Radialwellendichtring ist deshalb zusätzlich eine Rückhaltevorrichtung eingebaut. Mit dieser Rückhaltevorrichtung kann der rotierende Radialwellendichtring über der allgemein üblichen Drehzahlgrenze von ca. 6.000 bis 8.000 Umdrehungen pro Minute verwendet werden, ohne dass es zu Undichtigkeiten kommt. Mit einem erfindungsgemäßen Radialwellendichtring können nun Drehzahlen von bis zu ca. 15.000 Umdrehungen pro Minute erreicht werden, ohne dass Undichtigkeiten auftreten.

Der erfindungsgemäße Radialwellendichtring kann neben einer Hauptlippe eine zusätzliche Staublippe d.h. Schutzlippe aufweisen, wobei zwischen diesen beiden Dichtlippen Fett, insbesondere Wälzlagerfett zur zusätzlichen Abdichtung eingebracht sein kann.

Zwei Ausführungsbeispiele der Erfindung sind exemplarisch in den beigefügten schematischen Zeichnungen dargestellt. Es zeigen:
- Fig. 1: eine Ansicht im Halbschnitt einer beispielhaften Wälzlageranordnung mit einem Radialwellendichtring und einer erfindungsgemäßen ersten Ausführungsform einer Rückhaltevorrichtung mit einem ElastomerEinsatzteil,
- Fig. 2: eine Ansicht im Halbschnitt des Radialwellendichtrings gemäß Fig. 1 mit der ersten Ausführungsform der Rückhaltevorrichtung mit Elastomer-Einsatzteil,
- Fig. 3: eine vergrößerte Teilquerschnittsansicht des Radialwellendichtrings gemäß Fig. 1 mit der ersten Ausführungsform der Rückhaltevorrichtung mit Elastomer-Einsatzteil,
- Fig. 4: eine Ansicht im Halbschnitt einer beispielhaften Wälzlageranordnung mit einem Radialwellendichtring und einer erfindungsgemäßen zweiten Ausführungsform einer Rückhaltevorrichtung mit einem Metall-Ring,
- Fig. 5: eine vergrößerte Teilquerschnittsansicht des Radialwellendichtrings gemäß Fig. 4 mit der zweiten Ausführungsform der Rückhaltevorrichtung mit Metall-Ring,

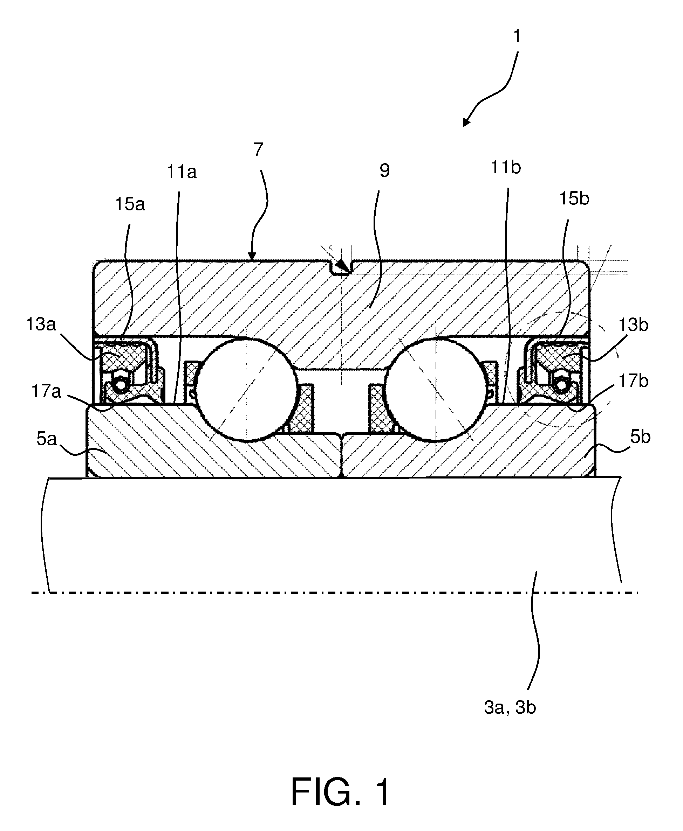

Die in der Fig. 1 beispielhafte dargestellte Lageranordnung 1 weist eine Achse 3a bzw. eine Welle 3b auf, an der beispielhaft zwei Innenringe 5a, 5b eines zweireihigen Wälzlagers 7 aufsitzen. Das zweireihige Wälzlager 7 weist in der dargestellten Ausführung außerdem einen gemeinsamen Außenring 9 auf. Jeder Innenring 5a, 5b ist mit einer Dichtungslaufbahn 11a, 11b versehen. Zwischen dem Außenring 9 und dem in Fig. 1 links dargestellten Innenring 5a ist ein erster Radialwellendichtring 13a in einer ersten Ausführungsform eingesetzt. Zwischen dem Außenring 9 und dem in Fig. 1 rechts dargestellten Innenring 5b ist ein zweiter Radialwellendichtring 13b ebenfalls in der ersten Ausführungsform eingesetzt. In der dargestellten Ausführung ist die Achse 3a feststehend ausgebildet, so dass auch die auf der Achse 3a aufsitzenden Innenringe 5a, 5b feststehend sind. Demgemäß ist der Außenring 9 drehend gelagert. Der Außenring 9 bildet insoweit eine drehbare Nabe mit jeweils einem statischen Dichtungssitz 15a, 15b für die beiden Radialwellendichtringe 13a, 13b. Die beiden Radialwellendichtringe 13a, 13b drehen sich folglich mit dem Außenring 9 mit. Dabei gleiten die Dichtlippen 17a, 17b auf den jeweils zugeordneten Dichtungssitzen 15a, 15b.

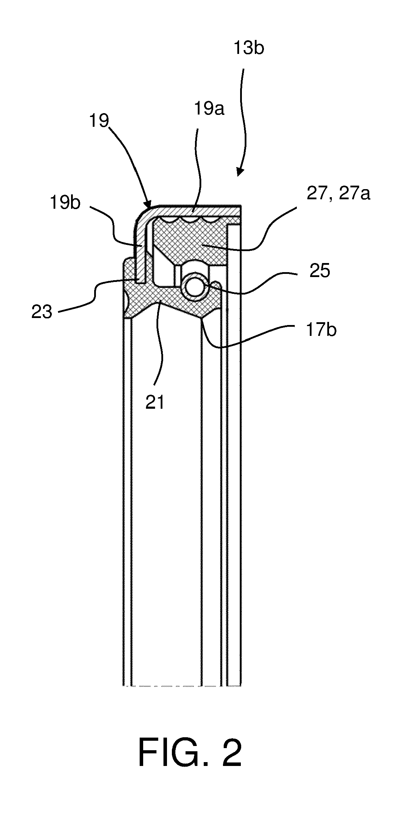

In der Fig. 2 ist einer der beiden Radialwellendichtringe 13a, 13b im Halbschnitt in Alleinstellung gezeigt. Der Radialwellendichtring 13b weist einen Stützring 19 und einen mit dem Stützring 19 verbundenen Dichtring 21 auf.

Der Stützring 19 weist eine sich axial erstreckende Mantelwand 19a auf, die insbesondere eine Stützfläche für den statischen Dichtungssitz 15b des Radialwellendichtrings bildet. Der Stützring 19 weist außerdem eine sich radial erstreckende Ringwand 19b auf, an dessen nach innen weisendem Ende 23, welches einen Innendurchmesser des Stützringes 19 bildet, der Dichtring 21 befestigt ist.

Der Dichtring 21 trägt die radial nach innen weisende Dichtlippe 17b. Der Dichtlippe 17b ist eine Zugfeder 25 zugeordnet. Die Zugfeder 25 ist ausgebildet, in einer Betriebsposition des Radialwellendichtrings 13b die Dichtlippe 17b gegen die mit der Dichtlippe 17b zusammenwirkende Dichtungslaufbahn 11b zu drücken.

Zum Zurückhalten der Zugfeder 25 weist der Radialwellendichtring 13b eine erfmdungsgemäße Rückhaltevorrichtung 27 auf.

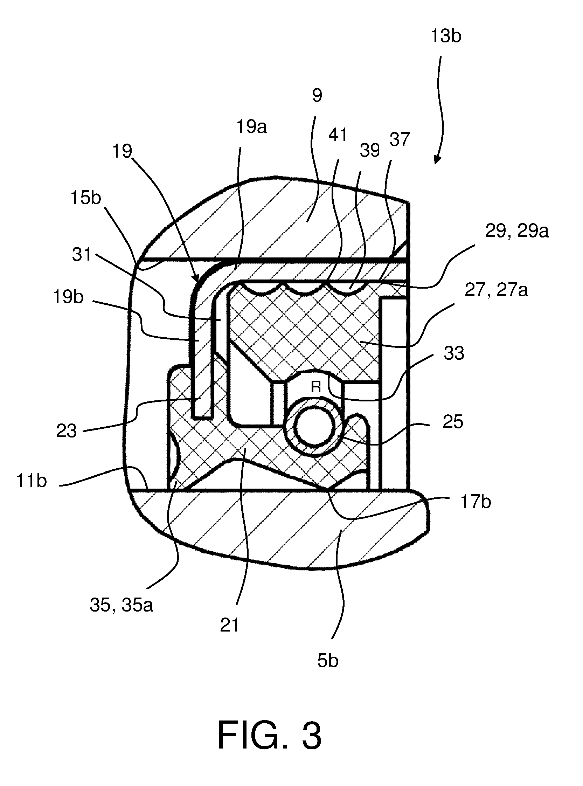

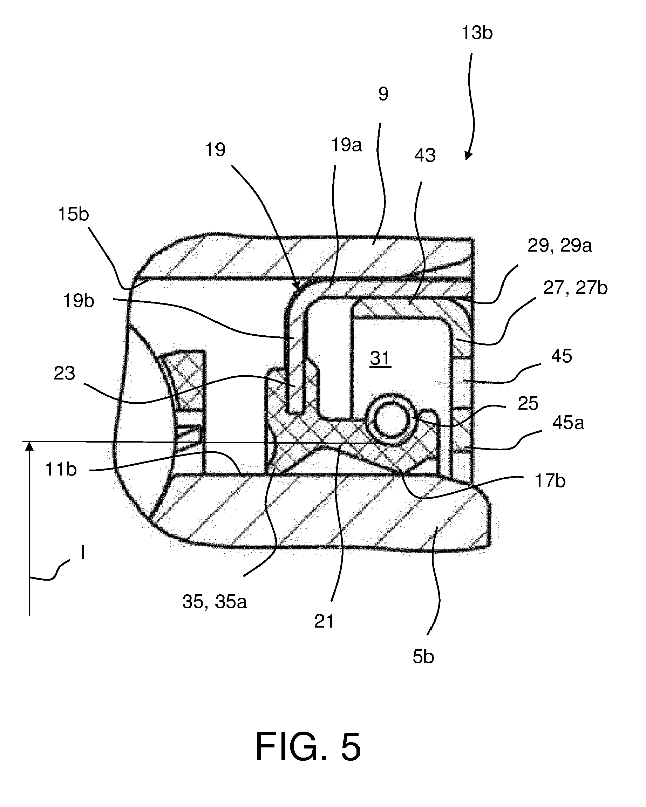

In der Fig. 3 ist eine erste Ausführungsform der Rückhaltevorrichtung 27 vergrößert gezeigt. Die Fig. 5 zeigt hingegen eine zweite Ausführungsform der Rückhaltevorrichtung 27.

Wie in der Fig. 3 dargestellt stützt sich die Rückhaltevorrichtung 27 radial an einer starren Innenumfangswand 29 ab, welche die Zugfeder 25 radial von außen umfängt. Im dargestellten Ausführungsbeispiel wird die Innenumfangswand 29 durch eine Innenwand 29a des Stützrings 19 bzw. der Innenseite der Mantelwand 19a des Stützrings 19 gebildet.

Die Rückhaltevorrichtung 27 weist in der ersten Ausführungsform ein ringförmiges, insbesondere elastomeres Einsatzteil 27a auf, das radial zwischen der Innenumfangswand 29 bzw. Innenwand 29a des Stützrings 19 und der Zugfeder 25 eingesetzt ist.

Das elastomere Einsatzteil 27a füllt dabei einen radial zwischen Innenumfangswand 29 bzw. Innenwand 29a des Stützrings 19 und der Zugfeder 25 liegenden Raum 31 1 teilweise aus. Dabei wird ein Ringspalt R, dessen Spaltbreite geringer ist als der Durchmesser der Zugfeder 25, belassen.

Die Rückhaltevorrichtung 27 bzw. das elastomere Einsatzteil 27a weist eine auf die Zugfeder 25 zuweisende, an den Querschnitt der Zugfeder 25 angepasste konturierte radiale Innenseite 33 auf.

Der Radialwellendichtring 13b weist neben der, eine Hauptlippe bildende Dichtlippe 17b eine zusätzliche Staublippe 35 d.h. Schutzlippe 35a auf. Zwischen Dichtlippe 17b und Staublippe 35 bzw. Schutzlippe 35a kann Fett, insbesondere Wälzlagerfett zur zusätzlichen Abdichtung eingebracht sein.

An einer Außenumfangsfläche 37 des elastomeren Einsatzteils 27a sind in der gezeigten Ausführungsform Rillen 39 und/oder Stege 41 angebracht, welche eine Dichtwirkung zwischen dem elastomeren Einsatzteil 27a und der Innenwand 29a des Stützrings 19 bzw. der Innenseite der Mantelwand 19a des Stützrings 19 verbessern können.

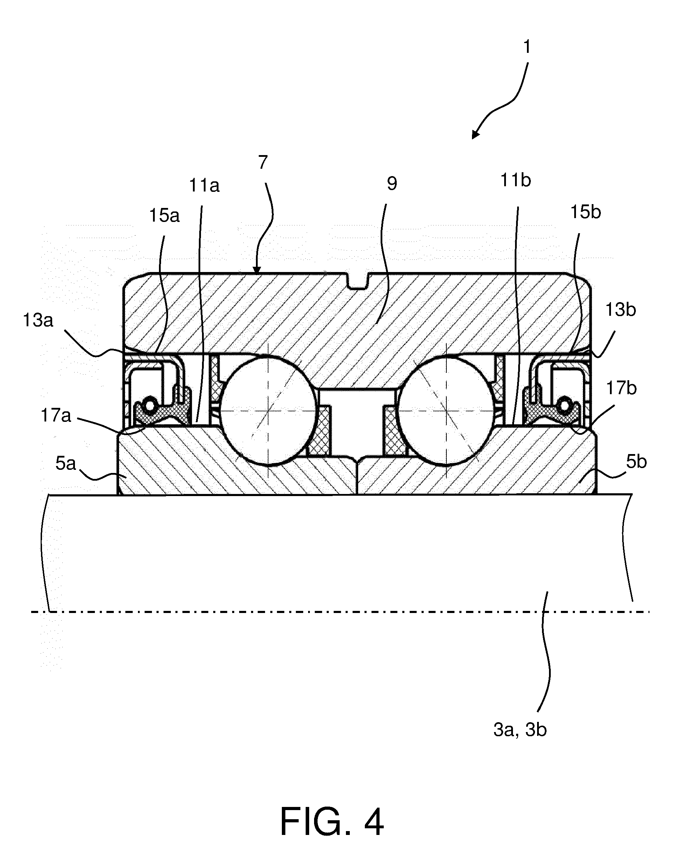

Die in der Fig. 4 beispielhafte dargestellte Lageranordnung 1 weist analog zur Fig. 1 eine Achse 3a bzw. eine Welle 3b auf, an der beispielhaft zwei Innenringe 5a, 5b eines zweireihigen Wälzlagers 7 aufsitzen. Das zweireihige Wälzlager 7 weist in der dargestellten Ausführung außerdem einen gemeinsamen Außenring 9 auf. Jeder Innenring 5a, 5b ist mit einer Dichtungslaufbahn 11a, 11b versehen. Zwischen dem Außenring 9 und dem in Fig. 4 links dargestellten Innenring 5a ist ein erster Radialwellendichtring 13a in einer zweiten Ausführungsform eingesetzt. Zwischen dem Außenring 9 und dem in Fig. 1 rechts dargestellten Innenring 5b ist ein zweiter Radialwellendichtring 13b ebenfalls in der zweiten Ausführungsform eingesetzt. In der dargestellten Ausführung ist die Achse 3a feststehend ausgebildet, so dass auch die auf der Achse 3a aufsitzenden Innenringe 5a, 5b feststehend sind. Demgemäß ist der Außenring 9 drehend gelagert. Der Außenring 9 bildet insoweit eine drehbare Nabe mit jeweils einem statischen Dichtungssitz 15a, 15b für die beiden Radialwellendichtringe 13a, 13b. Die beiden Radialwellendichtringe 13a, 13b drehen sich folglich mit dem Außenring 9 mit. Dabei gleiten die Dichtlippen 17a, 17b auf den jeweils zugeordneten Dichtungssitzen 15a, 15b.

Die in der Fig. 5 dargestellte zweite Ausführungsform eines Radialwellendichtrings 13a, 13b unterscheidet sich von der ersten Ausführungsform gemäß Fig. 3 dadurch, dass das elastomere Einsatzteil 27a durch einen Metall-Ring 27b ersetzt ist.

Die Rückhaltevorrichtung 27 bzw. der Metall-Ring 27b stützt sich radial an einer starren Innenumfangswand 29 ab, welche die Zugfeder 25 radial von außen umfängt. Im dargestellten Ausführungsbeispiel wird die Innenumfangswand 29 durch eine Innenwand 29a des Stützrings 19 bzw. der Innenseite der Mantelwand 19a des Stützrings 19 gebildet.

Der Radialwellendichtring 13b weist neben der, eine Hauptlippe bildende Dichtlippe 17b eine zusätzliche Staublippe 35 d.h. Schutzlippe 35a auf. Zwischen Dichtlippe 17b und Staublippe 35 bzw. Schutzlippe 35a kann Fett, insbesondere Wälzlagerfett zur zusätzlichen Abdichtung eingebracht sein.

Die Rückhaltevorrichtung 27 der zweiten Ausführungsform weist den zwischen der Innenumfangswand 29 und der Zugfeder 25 eingesetzten Metall-Ring 27b auf.

Der Metall-Ring 27b weist eine sich an der Innenumfangswand 29 abstützende axial erstreckende Mantelwand 43 und eine sich radial erstreckende Ringstirnwand 45 auf.

Die Ringstirnwand 45 ist bezüglich der Zugfeder 25 axial versetzt angeordnet. Die Ringstirnwand 45 weist im dargestellten Ausführungsbeispiel ein freies Stirnende 45a auf, das sich benachbart zum Dichtring 21 radial nach innen mindestens bis zu einem Innendurchmesser I der Zugfeder 25 erstreckt.

### Bezugszeichenliste

- 1: Lageranordnung
- 3a: Achse
- 3b: Welle
- 5a, 5b: Innenringe
- 7: Wälzlager
- 9: Außenring
- 11a, 11b: Dichtungslaufbahnen
- 13a, 13b: Radialwellendichtringe
- 15a, 15b: Dichtungssitz
- 17a, 17b: Dichtlippe
- 19: Stützring
- 21: Dichtring
- 23: Ende
- 25: Zugfeder
- 27: Rückhaltevorrichtung
- 27a: elastomeres Einsatzteil
- 27b: Metall-Ring
- 29: Innenumfangswand
- 29a: Innenwand
- 31: Raum
- 33: Innenseite
- 35: Staublippe
- 35a: Schutzlippe
- 37: Außenumfangsfläche
- 39: Rillen
- 41: Stege
- 43: Mantelwand
- 45: Ringstirnwand
- 45a: Stirnende
- R: Ringspalt
- I: Innendurchmesser

## Patentansprüche

1. Radialwellendichtring aufweisend einen Stützring (19) und einen mit dem Stützring (19) verbundenen Dichtring (21), der eine radial nach innen weisende Dichtlippe (17a, 17b) aufweist, der eine Zugfeder (25) zugeordnet ist, die ausgebildet ist, in einer Betriebsposition des Radialwellendichtrings (13a, 13b) die Dichtlippe (17a, 17b) gegen eine mit der Dichtlippe (17a, 17b) zusammenwirkende Dichtungslaufbahn (11a, 11b) zu drücken, des Weiteren aufweisend eine zum Zurückhalten der Zugfeder (25) ausgebildete Rückhaltevorrichtung (27) und eine die Zugfeder (25) radial von außen umfangende starre Innenumfangswand (29), an der sich die Rückhaltevorrichtung (27) radial abstützt.

2. Radialwellendichtring nach Anspruch 1, bei dem die starre Innenumfangswand (29) durch eine Innenwand (29a) des Stützrings (19) gebildet wird.

3. Radialwellendichtring nach Anspruch 1 oder 2, bei dem die Rückhaltevorrichtung (27) ein ringförmiges, insbesondere elastomeres Einsatzteil (27a) aufweist, das radial zwischen der Innenumfangswand (29) und der Zugfeder (25) eingesetzt ist.

4. Radialwellendichtring nach Anspruch 1 oder 2, bei dem das Einsatzteil (27a) einen radial zwischen Innenumfangswand (29) und der Zugfeder (25) liegenden Raum (31) teilweise ausfüllt, unter Belassen lediglich eines Ringspaltes (R), dessen Spaltbreite geringer ist, als der Durchmesser der Zugfeder (25).

5. Radialwellendichtring nach einem der Ansprüche 1 bis 4, bei dem die Rückhaltevorrichtung (27), insbesondere das Einsatzteil (27a) eine auf die Zugfeder (25) zuweisende, an den Querschnitt der Zugfeder (25) angepasst konturierte radiale Innenseite (33) aufweist.

6. Radialwellendichtring nach Anspruch 5, bei dem die Innenseite (33) als Rille ausgebildet ist, welche die Zugfeder (25) unter Belassen eines gleichmäßigen Spaltes über einen Teil ihrer Mantelfläche umgreift.

7. Radialwellendichtring nach einem der Ansprüche 1 bis 6, bei dem die Rückhaltevorrichtung (27) einen zwischen der Innenumfangswand (29) und der Zugfeder (25) eingesetzten Metall-Ring (27b) aufweist.

8. Radialwellendichtring nach Anspruch 7, bei dem der Metall-Ring (27b) eine sich an der Innenumfangswand (29) abstützende axial erstreckende Mantelwand und eine sich radial erstreckende Ringstirnwand aufweist.

9. Radialwellendichtring nach Anspruch 8, bei dem die Ringstirnwand bezüglich der Zugfeder axial versetzt angeordnet ist und einem freien Stirnende des Dichtrings benachbart sich radial nach innen mindestens bis zu einem Innendurchmesser der Zugfeder erstreckt.

10. Lageranordnung aufweisend eine Achse (3a), eine Welle (3b) oder einen Innenring (5a, 5b) eines Wälzlagers (7), mit einer Dichtungslaufbahn (11a, 11b), eine drehbare Nabe oder ein Außenring (9) des Wälzlagers (7), mit einem Dichtungssitz (15a, 15b), sowie einen zwischen Nabe bzw. Außenring (9) des Wälzlagers (7) und Achse (3a) bzw. Welle (3b) oder Innenring (5a, 5b) angeordneten Radialwellendichtring (13a, 13b) nach einem der Ansprüche 1 bis 9.
